# EUROPEAN PATENT APPLICATION

(11) **EP 4 717 569 A1**
(43) Date of publication of application: **01.04.2026**
(21) Application number: 25197100.8
(22) Date of filing: 20.08.2025
(51) Int. Cl.: B62J 9/12, B62J 17/06, B62J 23/00

(54) **STRADDLED VEHICLE**

(30) Priority: 30.09.2024 JP 2024170976
(71) Applicant: Yamaha Hatsudoki Kabushiki Kaisha, Iwata-shi, Shizuoka 438-8501 (JP)
(72) Inventor: CHOU, HUNGCHENG, 30346 Hukou Township (TW); LIN, TZUYANG, 30346 Hukou Township (TW); CHOU, YUTING, 30346 Hukou Township (TW)
(74) Representative: Studio Torta S.p.A.

(57) **Abstract**

There is disclosed a straddled vehicle (1) including a body frame (2), a seat (5), a foot board (24), a front cover (21), a leg shield (22), and a protector (41, 42); the body frame (2) including a head pipe (13); the leg shield (22) including an inner rack (26) that opens upward; the leg shield (22) being disposed behind the head pipe (13); the leg shield (22) extendingupward from the foot board (24); the protector (41, 42) being disposed on the outer lateral side of the leg shield (22); the inner rack (26) including a storage space (31), a rear wall portion (33), and a side wall portion (35, 36); the rear wall (33) portion being disposed behind the storage space (31); the side wall portion (35, 36) being disposed on the outer lateral side of the storage space (21);. the side wall portion (35, 36)extending from the rear wall portion (33) toward the front cover (21) in the side view of the vehicle (1); the protector (41, 42) overlaps at least a portion of the side wall portion (35, 36) in the side view of the vehicle (1).

## Description

### TECHNICAL FIELD

The present invention relates to a straddled vehicle.

### BACKGROUND

Some straddled vehicle are provided with an inner rack on the leg shield for storing items. For example, in the motorcycle of Japanese Patent No. 3633114, a storage section that opens upward is provided on the leg shield.

The width of the inner rack is limited by the width of the straddled vehicle. For this reason, it is difficult to increase the width of the inner rack in order to expand the storage space of the inner rack. On the other hand, if the inner rack is made larger in the front-rear direction, the storage space can be made larger in the front-rear direction. In that case, however, the side wall portion of the inner rack will have a shape that extends significantly in the front-rear direction, which reduces the rigidity of the inner rack. An object of the present invention is to expand the storage space of the inner rack while suppressing a decrease in the rigidity of the inner rack.

### DESCRIPTION OF THE INVENTION

A straddled vehicle according to one aspect of the present invention includes a body frame, a seat, a foot board, a front cover, a leg shield, and a protector. The body frame includes a head pipe. The seat is disposed rearward of the head pipe. The foot board is disposed forward and below the seat. The front cover is disposed in front of the head pipe. The leg shield includes an inner rack that opens upward. The leg shield is disposed behind the head pipe. The leg shield extends upward from the foot board. The protector is disposed on an outer lateral side of the leg shield. The inner rack includes a storage space, a rear wall portion, and a side wall portion. The rear wall portion is disposed behind the storage space. The side wall portion is disposed on the outer lateral side of the storage space. The side wall portion extends from the rear wall portion toward the front cover in a side view of the vehicle. The protector overlaps at least a portion of the side wall portion in the side view of the vehicle.

In the straddled vehicle according to the present aspect, the protector is disposed on the outer lateral side of the leg shield, and the protector overlaps at least a portion of the side wall portion of the inner rack in the side view of the vehicle. Therefore, even if the side wall portion of the inner rack is enlarged in the front-rear direction to expand the storage space, the rigidity of the side wall portion is improved by the protector. This increases the storage space of the inner rack and suppresses a decrease in the rigidity of the inner rack.

The rear wall portion may include a recess that is recessed forward at a center in the vehicle width direction. In this case, even if the inner rack becomes large in the front-rear direction, the rider's legs are unlikely to interfere with the inner rack.

The protector may be fixed to the side wall portion. In this case, the rigidity of the side wall portion is further improved by the protector.

The protector may overlap at least a portion of the rear wall portion in the side view of the vehicle. In this case, the rear wall portion is also protected by the protector.

The protector may have a shape that bulges laterally outward on the outer lateral side of the side wall portion. In this case, the storage space can be expanded.

The front cover may include a rear edge that extends obliquely rearward and upward in the side view of the vehicle. The protector may have a shape extending obliquely rearward and upward along the rear edge of the front cover in the side view of the vehicle. In this case, there is a concern that by locating the protector on the outer lateral side of the side wall portion, the wind that flows rearward along the surface of the front cover may be disturbed by the protector. However, since the protector has a shape that follows the rear edge of the front cover, the wind that flows rearward along the surface of the front cover is less likely to be disturbed by the protector.

The inner rack may include an opening that opens upward. The protector may extend above the opening. In this case, a wide range including a position above the opening is protected by the protector.

The outer lateral surface of the protector may include a protective surface that extends obliquely rearward and upward in the side view of the vehicle. The protective surface may overlap the side wall portion in the side view of the vehicle. In this case, the side wall portion of the inner rack is protected by the protective surface.

The protective surface may have a flat shape. In this case, the wind flowing rearward along the surface of the front cover is less likely to be disturbed by the protective surface.

The protective surface may include a protrusion. In this case, the protrusion improves the rigidity of the protective surface. In addition, the wind while riding makes it easier to remove moisture from the protector.

The protrusion may extend obliquely rearward and upward in the side view of the vehicle. In this case, the wind flowing along the protective surface is less likely to be disturbed by the protrusion. In addition, the wind while riding makes it easier to remove moisture from the protector.

The protective surface may include a plurality of protrusions disposed side by side in the front-rear direction of the vehicle. In this case, the protrusions improve the rigidity of the protective surface. In addition, the wind while riding makes it easier to remove moisture from the protector.

The plurality of protrusions may each extend obliquely rearward and upward in the side view of the vehicle. In this case, the wind flowing along the protective surface is less likely to be disturbed by the plurality of protrusions. In addition, the wind while riding makes it easier to remove moisture from the protector.

The protector may include a protector upper portion extending obliquely rearward and upward from the protective surface in the side view of the vehicle. In this case, a wide area above the protective surface is protected by the protector.

The protective surface may be located laterally outward of the protector upper portion. In this case, the storage space can be expanded.

### BRIEF DESCRIPTION OF THE DRAWINGS

FIG. 1 is a side view of a straddled vehicle according to an embodiment.
FIG. 2 is a front view of the straddled vehicle.
FIG. 3 is a rear view of a front portion of the straddled vehicle.
FIG. 4 is a perspective view of the front portion of the straddled vehicle.
FIG. 5 is a side view of the front portion of the straddled vehicle.
FIG. 6 is a side view of the front portion of the straddled vehicle with the protector removed.
FIG. 7 is an exploded view of the protector and an inner rack.
FIG. 8 is a side view of the left protector.
FIG. 9 is a perspective view of the left protector.
FIG. 10 is a view showing the inner surface of the left protector.

### EMBODIMENTS OF THE INVENTION

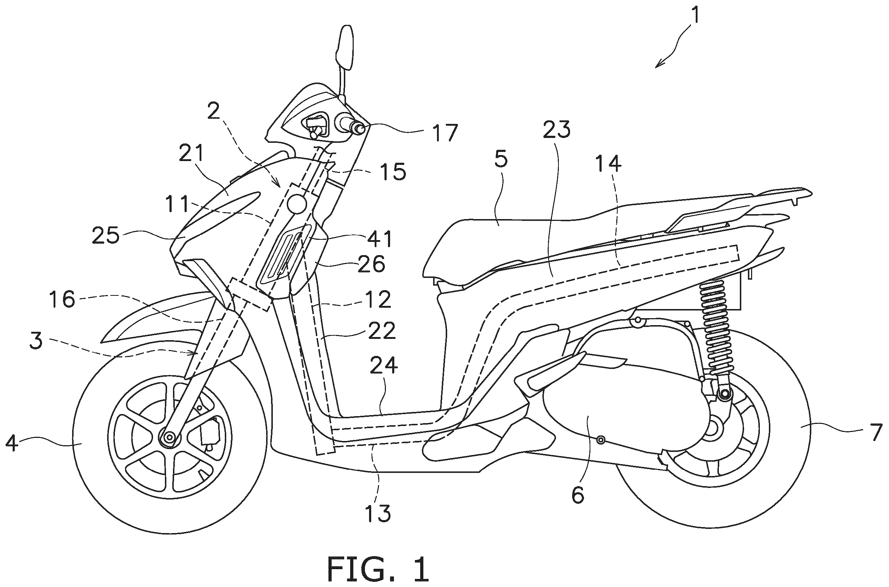

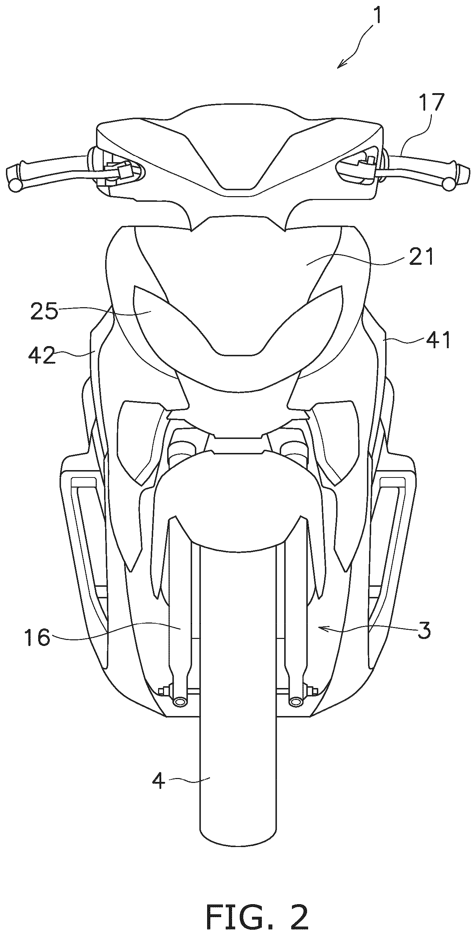

Hereinafter, a straddled vehicle according to an embodiment will be described with reference to the drawings. FIG. 1 is a side view of a straddled vehicle 1 according to an embodiment. FIG. 2 is a front view of the straddled vehicle 1. The straddled vehicle 1 is a scooter. The straddled vehicle 1 includes a vehicle body frame 2, a steering device 3, a front wheel 4, a seat 5, a power unit 6, and a rear wheel 7. In the following description, the front, rear, left and right directions refer to directions as seen by a rider seated on the seat 5.

The body frame 2 includes a head pipe 11, a down frame 12, a lower frame 13, and a rear frame 14. The head pipe 11 extends forward and downward. The down frame 12 extends downward from the head pipe 11. The lower frame 13 extends rearward from a lower portion of the down frame 12. The rear frame 14 extends rearward and upward from a rear portion of the down frame 12.

The steering device 3 is rotatably supported by the head pipe 11. The steering device 3 rotatably supports the front wheel 4. The steering device 3 includes a steering shaft 15, a front fork 16, and a handlebar 17. The steering shaft 15 is rotatably supported by the head pipe 11. The front fork 16 is connected to a lower portion of the steering shaft 15. The front fork 16 rotatably supports the front wheel 4. The handlebar 17 is connected to an upper portion of the steering shaft 15.

The seat 5 is disposed behind the head pipe 11. The seat 5 is disposed above the rear frame 14. The power unit 6 is disposed below the seat 5. The power unit 6 includes, for example, an internal combustion engine. Alternatively, the power unit 6 may include an electric motor. The rear wheel 7 is rotatably supported by the power unit 6.

The straddled vehicle 1 includes a front cover 21, a leg shield 22, a rear cover 23, and a foot board 24. The front cover 21 is disposed in front of the head pipe 11. The front cover 21 covers the head pipe 11 from the front and both lateral sides. A headlight 25 is disposed on the front cover 21. The leg shield 22 is disposed behind the head pipe 11. The leg shield 22 covers the head pipe 11 from the rear. The leg shield 22 extends upward from the foot board 24.

The rear cover 23 is disposed below the seat 5. The rear cover 23 covers the rear frame 14 from the lateral side. The foot board 24 is disposed between the front cover 21 and the rear cover 23. The foot board 24 is disposed forward of and below the seat 5. The foot board 24 is a portion on which the rider of the straddled vehicle 1 places his/her feet. The foot board 24 has a flat shape. Alternatively, the foot board 24 may include a center tunnel portion protruding upward.

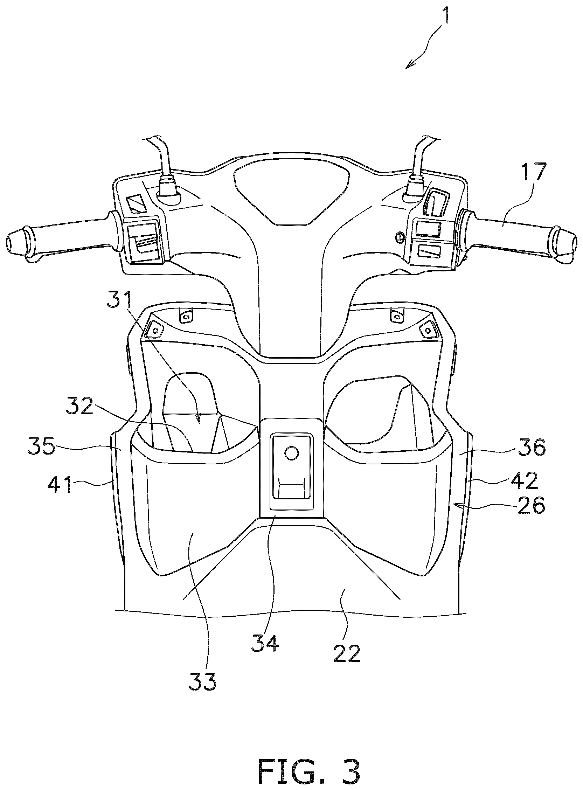

The leg shield 22 includes an inner rack 26. The inner rack 26 is disposed in front of the seat. FIG. 3 is a rear view of the front portion of the straddled vehicle 1.

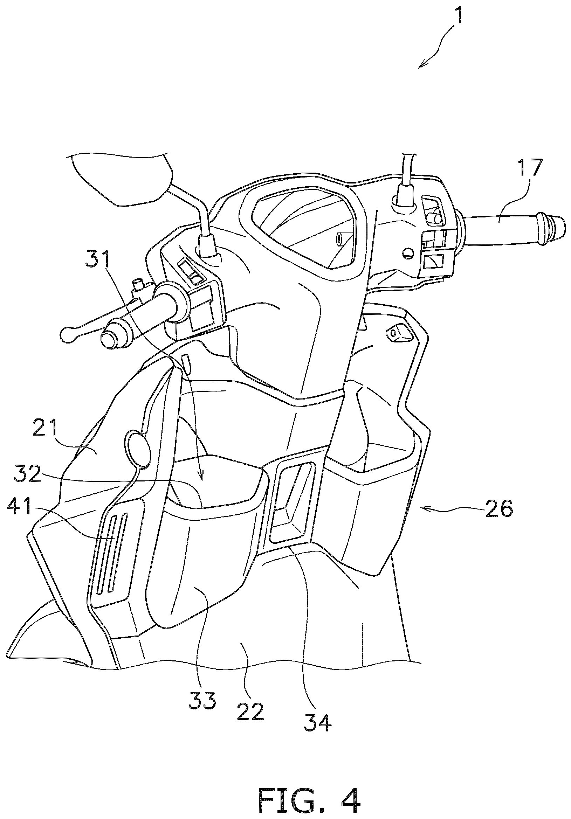

FIG. 4 is a perspective view of the front portion of the straddled vehicle 1. As shown in FIGS. 3 and 4, the inner rack 26 includes a storage space 31, an opening 32, and a rear wall portion 33. The opening 32 communicates with the storage space 31 and opens upward. The rear wall portion 33 is disposed behind the storage space 31. The rear wall portion 33 includes a recess 34. The recess 34 is recessed forward at the center in the vehicle width direction.

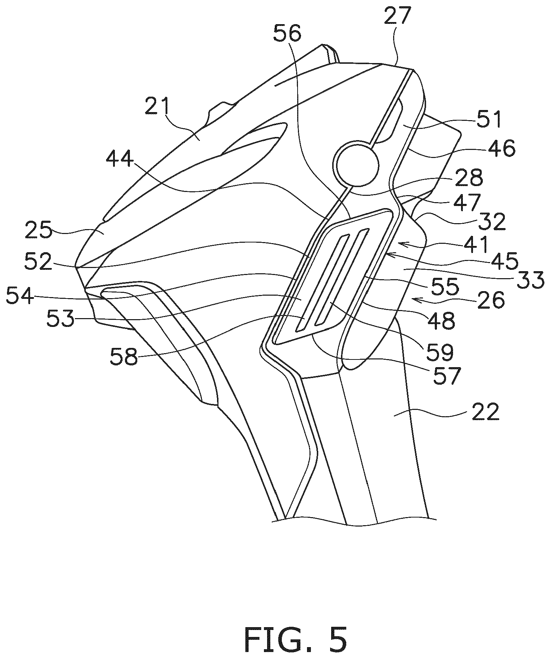

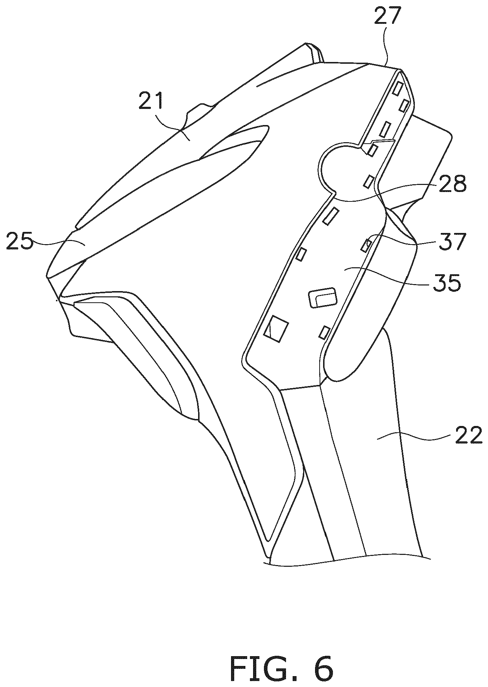

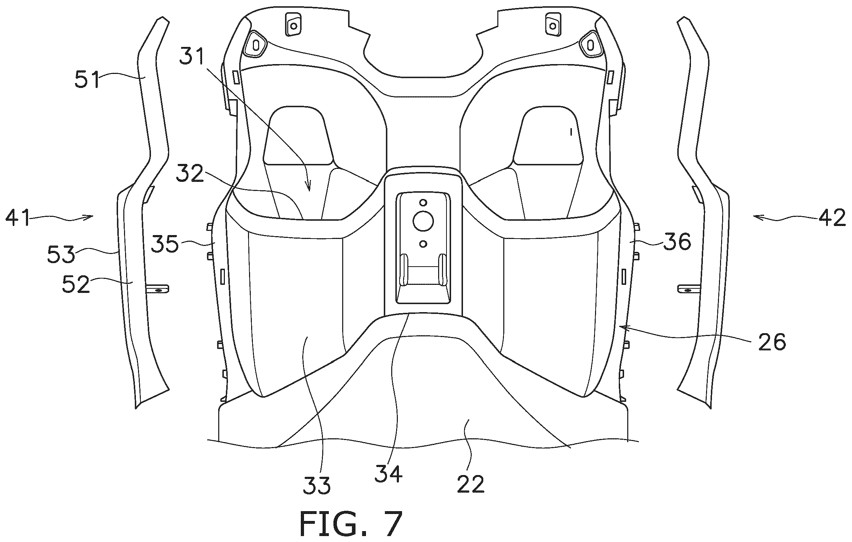

The straddled vehicle 1 includes protectors 41 and 42. The protectors 41 and 42 are disposed on the outer lateral sides of the inner rack 26. The protectors 41 and 42 are attached to the inner rack 26. The protectors 41 and 42 cover the inner rack 26 from the outer lateral sides. FIG. 5 is a side view of the front portion of the straddled vehicle 1. FIG. 6 is a side view of the front portion of the straddled vehicle 1 with the protectors 41 and 42 removed. FIG. 7 is an exploded view of the protectors 41 and 42 and the inner rack 26.

The protectors 41 and 42 are separate components from the inner rack 26. The protectors 41 and 42 are detachably attached to the inner rack 26. The protectors 41 and 42 include a left protector 41 and a right protector 42. The left protector 41 is disposed on the left side of the inner rack 26. The right protector 42 is disposed on the right side of the inner rack 26. The left protector 41 and the right protector 42 are disposed symmetrically on the left and right sides of the straddled vehicle 1. The left protector 41 and the right protector 42 have shapes that are symmetrical to each other.

As shown in FIG. 7, the inner rack 26 includes a left side wall portion 35 and a right side wall portion 36. The left side wall portion 35 is disposed on the left side of the storage space 31. The right side wall portion 36 is disposed on the right side of the storage space 31. The left side wall portion 35 and the right side wall portion 36 each extend from the rear wall portion 33 toward the front cover 21.

The left protector 41 is disposed on the outer lateral side of the left side wall portion 35. As shown in FIGS. 5 and 6, the left protector 41 overlaps at least a portion of the left side wall portion 35 and the rear wall portion 33 in the side view of the vehicle. The left protector 41 is fixed to the left side wall portion 35. As shown in FIG. 6, the left side wall portion 35 includes a locking hole 37. In FIG. 6, reference numerals are attached to only one of the plurality of locking holes 37, and reference numerals for the other locking holes 37 are omitted.

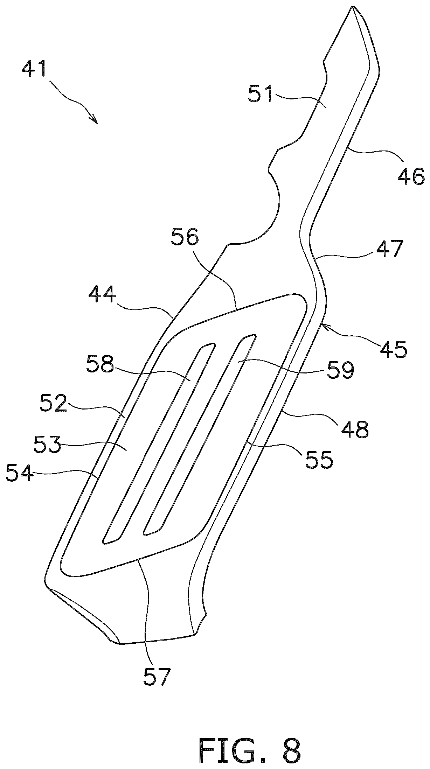

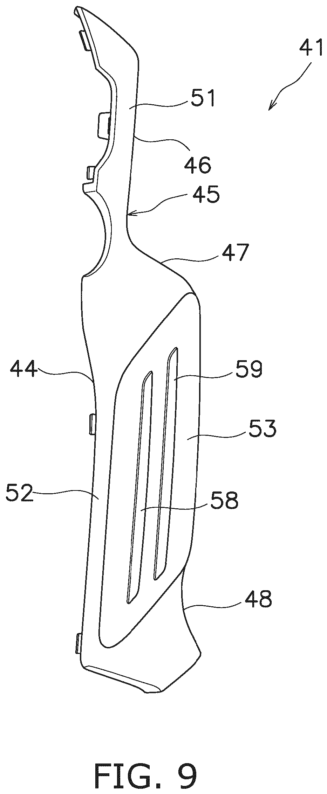

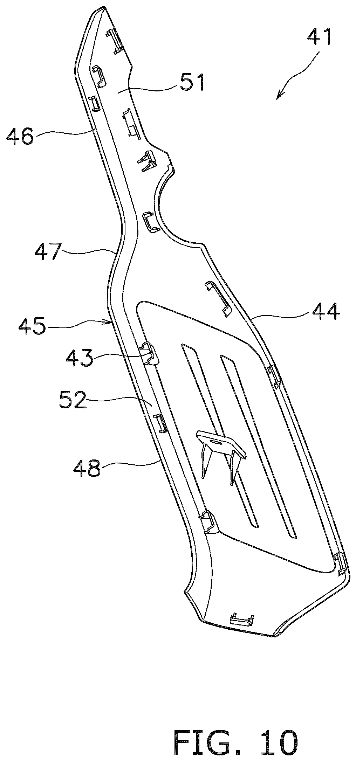

FIG. 8 is a side view of the left protector 41. FIG. 9 is a perspective view of the left protector 41. FIG. 10 is a view showing the inner surface of the left protector 41. As shown in FIG. 10, the left protector 41 includes a plurality of locking claws 43. The plurality of locking claws 43 are disposed on the inner surface of the left protector 41. The left protector 41 is attached to the left side wall portion 35 by engaging the plurality of locking claws 43 of the left protector 41 with the plurality of locking holes 37 in the left side wall portion 35.

As shown in FIG. 5, the left protector 41 extends above the rear wall portion 33. The left protector 41 extends above the opening 32. The left protector 41 extends above the headlight 25. The left protector 41 extends to the height of the upper edge 27 of the front cover 21 in the side view of the vehicle. The left protector 41 extends below the rear wall portion 33. The left protector 41 extends below the headlight 25.

The left protector 41 has a vertically elongated shape. As shown in FIGS. 5 and 8, the left protector 41 includes a front edge 44 and a rear edge 45. The left protector 41 has a shape that is bent inward at the front edge 44 and the rear edge 45. As shown in FIG. 5, the front edge 44 of the left protector 41 is disposed behind the rear edge 28 of the front cover 21. The rear edge 28 of the front cover 21 extends obliquely rearward and upward in the side view of the vehicle. The front edge 44 of the left protector 41 is disposed along the rear edge 28 of the front cover 21. The front edge 44 of the left protector 41 has a shape that extends obliquely rearward and upward along the rear edge 28 of the front cover 21 in the side view of the vehicle.

The rear edge 45 of the left protector 41 includes an upper rear edge 46, a step portion 47, and a lower rear edge 48. The upper rear edge 46 extends obliquely rearward and upward in the side view of the vehicle. The step portion 47 is disposed between the upper rear edge 46 and the lower rear edge 48. The rear edge 45 of the left protector 41 has a bent shape between the upper rear edge 46 and the step portion 47. The rear edge 45 of the left protector 41 has a bent shape between the lower rear edge 48 and the step portion 47. The lower rear edge 48 extends obliquely rearward and upward in the side view of the vehicle.

The left protector 41 includes an protector upper portion 51 and a protector lower portion 52. The protector upper portion 51 extends obliquely rearward and upward from the protector lower portion 52 in the side view of the vehicle. The protector upper portion 51 is disposed above the opening 32.

The protector lower portion 52 is disposed below the protector upper portion 51. The protector lower portion 52 is disposed at the same height as the rear wall portion 33. The protector lower portion 52 is larger in the front-rear direction than the protector upper portion 51. The above-mentioned upper rear edge 46 is included in the protector upper portion 51. The lower rear edge 48 is included in the protector lower portion 52. The step portion 47 is located between the protector upper portion 51 and the protector lower portion 52. As shown in FIG. 7, the protector lower portion 52 has a shape that bulges laterally outward on the outer lateral side of the left side wall portion 35. The outer lateral surface of the protector lower portion 52 is disposed laterally outward of the outer lateral surface of the protector upper portion 51.

The outer lateral surface of the protector lower portion 52 includes a protective surface 53. The protective surface 53 is located laterally outward of the protector upper portion 51. The protective surface 53 extends obliquely rearward and upward in the side view of the vehicle. The protective surface 53 overlaps with the left side wall portion 35 in the side view of the vehicle. The protective surface 53 has a flat shape. In the side view of the vehicle, the protective surface 53 has a rectangular shape. In the side view of the vehicle, the protective surface 53 has a parallelogram shape.

In particular, the protective surface 53 includes a front edge 54, a rear edge 55, an upper edge 56, and a lower edge 57. The front edge 54 of the protective surface 53 extends obliquely rearward and upward in the side view of the vehicle. The rear edge 55 of the protective surface 53 extends obliquely rearward and upward in the side view of the vehicle. The front edge 54 of the protective surface 53 and the rear edge 55 of the protective surface 53 are parallel to each other. The length of the front edge 54 of the protective surface 53 and the length of the rear edge 55 of the protective surface 53 are longer than the length of the upper edge 56 of the protective surface 53 and the length of the lower edge 57 of the protective surface 53, respectively.

The upper edge 56 of the protective surface 53 extends obliquely rearward and upward in the side view of the vehicle. The lower edge 57 of the protective surface 53 extends obliquely rearward and upward in the side view of the vehicle. The upper edge 56 of the protective surface 53 and the lower edge 57 of the protective surface 53 are parallel to each other. The inclination angles of the upper edge 56 and the lower edge 57 of the protective surface 53 with respect to the horizontal direction is smaller than the inclination angles of the front edge 54 and the rear edge 55 of the protective surface 53 with respect to the horizontal direction, respectively.

The protective surface 53 includes a plurality of protrusions 58 and 59. The plurality of protrusions 58 and 59 are disposed side by side in the front-rear direction of the vehicle. The plurality of protrusions 58 and 59 are disposed parallel to each other. The plurality of protrusions 58 and 59 are disposed parallel to the front edge 44 and the rear edge 45 of the protective surface 53. The plurality of protrusions 58 and 59 each extend obliquely rearward and upward in the side view of the vehicle. In detail, the plurality of protrusions 58 and 59 include a first protrusion 58 and a second protrusion 59.

The right protector 42 has a structure similar to that of the left protector 41, except that it is bilaterally symmetrical to the left protector 41. Therefore, a detailed description of the right protector 42 will be omitted.

In the straddled vehicle 1 according to the present embodiment described above, the protectors 41 and 42 are disposed on the outer lateral sides of the leg shield 22, and the protectors 41 and 42 overlap at least a portion of the side wall portions 35 and 36 of the inner rack 26 in the side view of the vehicle. Therefore, even if the side wall portions 35 and 36 of the inner rack 26 are enlarged in the front-rear direction to expand the storage space 31, the rigidity of the side wall portions 35 and 36 is improved by the protectors 41 and 42. This allows the storage space 31 of the inner rack 26 to be expanded, and also prevents the rigidity of the inner rack 26 from decreasing.

Although one embodiment of the present invention has been described above, the present invention is not limited to the above embodiment, and various modifications are possible without departing from the gist of the invention.

The shape of the inner rack 26 is not limited to that in the above embodiment and may be modified. For example, the recess 34 in the rear wall portion 33 may be omitted. The shapes of the protectors 41 and 42 are not limited to those in the above embodiment and may be changed. For example, the number of protrusions on the protective surface 53 is not limited to two, but may be one or more than two.

### REFERENCE SIGNS LIST

2: Body frame, 5: Seat, 11: Head pipe, 21: Front cover, 22: Leg shield, 24: Foot board, 26: Inner rack, 28: Rear edge of Front cover, 31: Storage space, 32: Opening, 33: Rear wall, 34: Recess, 35: Left side wall portion, 41 and 42: Protector, 51: Protector upper portion, 53: Protective surface, 58 and 59: Protrusion

## Claims

1. A straddled vehicle (1) comprising:
a body frame (2) including a head pipe (11);
a seat (5) disposed rearward of the head pipe (11);
a foot board (24) disposed forward and below the seat (5);
a front cover (21) disposed in front of the head pipe (11);
a leg shield (22) including an inner rack (26) that opens upward, the leg shield (22) being disposed behind the head pipe (11) and extending upward from the foot board (24); and
a protector (41, 42) disposed on an outer lateral side of the leg shield (22), wherein
the inner rack (26) includes:
a storage space (31),
a rear wall portion (33) disposed behind the storage space (31), and
a side wall portion (35, 36) disposed on the outer lateral side of the storage space (31) and extending from the rear wall portion (33) toward the front cover (21) in a side view of the vehicle (1), and
the protector (41, 42) overlaps with at least a portion of the side wall portion (35, 36) in the side view of the vehicle (1).

2. The straddled vehicle according to claim 1, wherein the rear wall portion (33) includes a recess (34) recessed forward at a center of the rear wall portion (33) in a width direction of the vehicle (1).

3. The straddled vehicle according to claim 1, wherein the protector (41, 42) is fixed to the side wall portion (35, 36).

4. The straddled vehicle according to claim 1, wherein the protector (41, 42) overlaps with at least a portion of the rear wall portion (33) in the side view of the vehicle (1).

5. The straddled vehicle according to claim 1, wherein the protector (41, 42) has a shape that bulges laterally outward on the outer lateral side of the side wall portion (35, 36).

6. The straddled vehicle according to claim 1, wherein
the front cover (21) includes a rear edge (28) extending obliquely rearward and upward in the side view of the vehicle (1), and
the protector (41, 42) has a shape extending obliquely rearward and upward along the rear edge (28) of the front cover (21) in the side view of the vehicle (1).

7. The straddled vehicle according to claim 1, wherein
the inner rack (26) includes an opening (32) that opens upward, and
the protector (41, 42) extends above the opening (32).

8. The straddled vehicle according to claim 1, wherein
an outer lateral surface of the protector (41, 42) includes a protective surface (53) extending obliquely rearward and upward in the side view of the vehicle (1), and
the protective surface (53) overlaps with the side wall portion in the side view of the vehicle (1).

9. The straddled vehicle according to claim 8, wherein the protective surface (53) has a flat shape.

10. The straddled vehicle according to claim 8, wherein the protective surface (53) includes a protrusion (58, 59).

11. The straddled vehicle according to claim 10, wherein the protrusion (58, 59) extends obliquely rearward and upward in the side view of the vehicle (1).

12. The straddled vehicle according to claim 8, wherein the protective surface (53) includes a plurality of protrusions (58, 59) disposed side by side in a front-rear direction of the vehicle (1).

13. The straddled vehicle of claim 12, wherein
the plurality of protrusions (58, 59) each extend obliquely rearward and upward in the side view of the vehicle (1).

14. The straddled vehicle according to claim 8, wherein the protector (41, 42) includes a protector upper portion (51) extending obliquely rearward and upward from the protective surface (53) in the side view of the vehicle (1).

15. The straddled vehicle of claim 14, wherein the protective surface (53) is located laterally outward of the protector upper portion (51).
